# EUROPÄISCHE PATENTSCHRIFT

(11) **EP 2 359 178 B1**
(45) Veröffentlichungstag und Bekanntmachung des Hinweises auf die Patenterteilung: **23.04.2014**
(21) Anmeldenummer: 09799610.2
(22) Anmeldetag: 16.12.2009
(51) Int. Cl.: G02B 26/10, G02B 21/00

(54) **VERFAHREN UND VORRICHTUNG ZUR DYNAMISCHEN VERLAGERUNG EINES LICHTSTRAHLS GEGENÜBER EINER DEN LICHTSTRAHL FOKUSSIERENDEN OPTIK**
Method and device for dynamic displacement of a beam of light from a lens focussing the beam of light
Procédé et dispositif de stockage dynamique d'un rayon lumineux par rapport à une optique focalisant le rayon lumineux

(30) Priorität: 19.12.2008 EP 08172450
(43) Veröffentlichungstag der Anmeldung: 24.08.2011
(73) Patentinhaber: Deutsches Krebsforschungszentrum, 69120 Heidelberg (DE)
(72) Erfinder: ENGELHARDT, Johann, 76669 Bad Schönborn (DE)
(74) Vertreter: REHBERG HÜPPE + PARTNER
(86) Internationale Anmeldenummer: PCT/EP2009/067269
(87) Internationale Veröffentlichungsnummer: WO 2010/069987

(56) Entgegenhaltungen:
- EP-A- 1 584 310
- EP-A- 1 970 744
- WO-A-03/075069
- DE-A1- 4 026 130
- DE-A1- 10 321 829
- US-A- 5 225 923
- US-A1- 2006 151 449

## Beschreibung

### TECHNISCHES GEBIET DER ERFINDUNG

Die Erfindung bezieht sich auf eine Vorrichtung zur dynamischen Verlagerung eines Lichtstrahls gegenüber einer den Lichtstrahl fokussierenden Optik mit den Merkmalen des Oberbegriffs des unabhängigen Patentanspruchs 1 sowie auf ein entsprechendes Verfahren zur dynamischen Verlagerung eines Lichtstrahls gegenüber einer den Lichtstrahl fokussierenden Optik mit den Merkmalen des Oberbegriffs des unabhängigen Patentanspruchs 8.

Die Erfindung fällt dabei insbesondere auf das Gebiet der Lichtrastermikroskopie, bei der ein Objekt mit dem fokussierten Lichtstrahl, in der Regel einem fokussierten Laserstrahl, abgetastet wird. Dieses Abtasten wird auch als Scannen oder Rastern bezeichnet, und eine entsprechende Vorrichtung ist auch als Strahlscanner, Laserscanner oder Rasterscanner bekannt.

### STAND DER TECHNIK

In der frühen konfokalen Lichtrastermikroskopie, die den Vorteil hat, dass außerhalb der Fokalebene des Mikroskopobjektivs liegende Objektteile nicht unscharf und damit störend dem Bild des interessierenden Objekts in der Fokalebene überlagert werden, wurden sogenannte Objektscanner verwendet, die das jeweilige Objekt relativ zu dem ruhenden Lichtstrahl bewegen. Eine solche Anordnung ist in der US 3,013,467 beschrieben. Die Verwendung eines Objektscanners erlaubt zwar eine einfache, statische Optik. Trägheitsbedingt ermöglicht ein Objektscanner jedoch nur vergleichsweise geringe Abtastgeschwindigkeiten und entsprechend geringe Bildraten. Praktisch sind die Abtastgeschwindigkeiten in der Biologie oder Medizin nur für tote fixierte Proben ausreichend.

Für die Abbildung lebender Zellstrukturen in biologischen Proben werden in konfokalen Lichtrastermikroskopen daher Strahlrasterverfahren angewandt, bei denen der Lichtstrahl, in aller Regel ein Laserstrahl, gegenüber der ihn anschließend fokussierenden Optik mit Strahlablenkungsmitteln so abgelenkt wird, dass er um einen Punkt in der Pupillenebene der fokussierenden Optik verdreht wird, die hier kurz als Pupille bezeichnet wird, um ihn in der Fokalebene des Mikroskopobjektivs zu verlagern. Bei Mikroskopobjektiven höherer Vergrößerung liegt jedoch die Pupille im Objektiv selbst und ist somit mechanisch nicht zugänglich. Daher muss der verwendete Rastermechanismus in eine optische Abbildung der Pupille des Objektivs verlegt werden. Wenn der Strahldrehpunkt nicht genau in der Pupille der fokussierenden Optik liegt, nimmt die Bildhelligkeit zum Rand des Abtastbereichs hin stark ab.

In der Pupille der fokussierenden Optik bzw. einer Abbildung der Pupille der Optik kann jeweils nur ein Strahlablenkungsmittel angeordnet werden. Um mit einem solchen einzigen Strahlablenkungsmittel in Form eines Spiegels den Abtastbereich in zwei Richtungen abzutasten, ist es aus der DE 84 28 200 U1 bekannt, den Spiegel kardanisch so zu lagern, dass er um den Auftreffpunkt des einfallenden Lichtstrahls in zwei zueinander senkrechten Richtungen verschwenkbar ist. Die mechanische Ausführung dieses bekannten Rasterscanners erlaubt aber keine hohen Abtastgeschwindigkeiten, und auch die mögliche Präzision ist begrenzt.

Grundsätzlich ist es möglich, zwei Abbildungen der Pupille der fokussierenden Optik vorzusehen und in jeder Pupillenabbildung ein Strahlablenkungsmittel anzuordnen, das den Lichtstrahl in einer von zwei Richtungen gegenüber der fokussierenden Optik ablenkt. Hierdurch wird jedoch der optische Aufbau komplex, mit negativen Auswirkungen auf die optische Transmission.

Wird einer von zwei getrennten Drehspiegeln, die um orthogonale Schwenkachsen verschwenkbar sind, oder werden diese sogar beide nur nahe einer einzigen Abbildung der Pupille einer nachgeschalteten fokussierenden Optik angeordnet, resultieren hieraus neben einer variierenden Bildhelligkeit geometrische Verzeichnung und chromatische Fehler.

Einen Überblick über bekannte Laserscanner gibt James B. Pawley: "Handbook of Biological Confocal Microscopy", 3. Auflage, Springer Verlag, ISBN 10. 0-387-25921-X, ISBN 13: 987-0387-25921-5.

Aus der DE 40 26 130 A1 sind eine Vorrichtung mit den Merkmalen des Oberbegriffs des unabhängigen Patentanspruchs 1 und ein Verfahren mit den Merkmalen des Oberbegriffs des unabhängigen Patentanspruchs 8 bekannt, bei denen ein Laserstrahl durch zwei Drehspiegel, deren Schwenkbewegung um parallele Schwenkachsen gemäß einer festen mathematischen Beziehung gekoppelt ist, in einer Richtung so abgelenkt wird, dass er um einen festen Auftreffpunkt auf einen weiteren Drehspiegel verdreht wird. Durch Verschwenken dieses weiteren Drehspiegels wird der Laserstrahl in der zweiten Richtung abgelenkt. Wenn der Auftreffpunkt dabei in der Eintrittspupille der nachgeschalteten fokussierenden Optik liegt, fällt der gemeinsame Drehpunkt des Laserstrahls in beiden Richtungen in die Pupille der fokussierenden Optik.

Eine weitere Vorrichtung mit den Merkmalen des Oberbegriffs des unabhängigen Patentanspruchs 1 und ein weiteres Verfahren mit den Merkmalen des Oberbegriffs des unabhängigen Patentanspruchs 8 sind aus der DE 196 54 210 A1 bekannt. Hier sind zum Ablenken des Lichtstrahls in der ersten Richtung zwei in einer vorgegebenen Winkelposition drehfest zueinander angeordnete Spiegel vorgesehen, die so gemeinsam um die optische Achse eines einfallenden Laserstrahls verschwenkbar sind, dass dieser in einem festen Punkt auf einen auf der verlängerten optischen Achse des einfallenden Laserstrahls angeordneten weiteren Drehspiegel fällt, der um eine orthogonal zu dem einfallenden Lichtstrahl und dem abgelenkten Lichtstrahl verlaufenden Schwenkachse verschwenkbar ist. Durch Anordnung des weiteren Drehspiegels in einer Abbildung der Pupille der nachgeschalteten fokussierenden Optik wird der Lichtstrahl in beiden Richtungen um einen einzigen Punkt in dieser Pupillenabbildung verdreht. Bei dieser bekannten Vorrichtung können weitere Spiegel vorgesehen sein, um den fokussierten Laserstrahl um die optische Achse des einfallenden Laserstrahls zu verdrehen.

In jüngerer Zeit sind Verfahren der hochauflösenden Lichtrastermikrokopie aufgekommen, mit denen Auflösungen jenseits der Beugungsgrenze erreicht werden. Ein Beispiel hierfür ist die STED (Stimulated Emission Depletion)-Mikroskopie, wie sie in der WO 95/21393 A beschrieben ist. Diese neueren Verfahren stellen an die Abbildung des Laserstrahls, mit dem der Abtastbereich abgetastet wird, in die Pupille einer fokussierenden Optik wesentlich höhere Anforderungen als die herkömmliche Lichtrastermikroskopie. So wird in der STED-Mikroskopie ein erster Fluoreszenzanregungslaserstrahl zur Fluoreszenzanregung wie bei der konfokalen Lichtrastermikrokopie verwendet. Zusätzlich wird jedoch ein zweiter Stimulationslaserstrahl eingesetzt, der die Fluoreszenz im Randbereich des beugungsbegrenzten Lichtflecks des Anregungslichts löscht. Dazu wird die Intensitätsverteilung des Stimulationslichts in der Fokalebene z. B. ringförmig gestaltet. Um in der Mitte der Intensitätsverteilung des Stimulationslichts eine Nullstelle zu erreichen, wird das elektrische Feld des Stimulationslaserstrahls mit sogenannten Phasenplatten oder -modulatoren räumlich so in einer Abbildung der Pupille des Objektivs moduliert, dass das Integral des elektrischen Felds über der Pupille verschwindet. Für die praktische Durchführung der STED-Mikroskopie muss die Restlichtintensität in der Nullstelle des Stimulationsstrahls unter einem Prozent der maximalen Umgebungshelligkeit liegen, um nicht auch das interessierende Messsignal aus dem Fokuspunkt zu löschen. Die räumliche Phasenstruktur des Stimulationsstrahls in der Pupille darf sich entsprechend beim Abtasten des Abtastbereichs durch Ablenken des Lichtstrahls nur um geringste Bruchteile, in der Praxis maximal etwa ein Tausendstel des Pupillendurchmessers, verschieben. Dieses Kriterium ist mittels der bekannten Laserscanner falls überhaupt nur mit extremem Aufwand, d. h. hochwertigsten optischen Komponenten für die Drehspiegel und die fokussierende Optik, zu erreichen.

Aus der US 2006/0151449 A1 sind ein System und ein Verfahren zum Abtasten einer Oberfläche mit einem parallelen Strahl bekannt. Ein kollimierter Lichtstrahl, beispielsweise von einem Laser, wird mit zwei Paaren von Lichtablenkungsmitteln, wie beispielsweise Spiegeln, lateral zu seiner optischen Achse parallelverschoben. Die Strahlablenkungsmittel sind nacheinander um zwei zueinander parallele und quer zu dem Lichtstrahl verlaufende Schwenkachsen und um zwei weitere zueinander parallele und quer zu dem Lichtstrahl, aber auch quer zu den ersten Schwenkachsen verlaufende Schwenkachsen verschwenkbar. Dabei werden die beiden Strahlablenkungsmittel, die um zueinander parallele Schwenkachsen verschwenkbar sind, jeweils um gleiche Winkel gleichsinnig verschwenkt, um die Parallelverschiebung des Laserstrahls zu bewirken, so dass beispielsweise Drehspiegel als Strahlablenkungsmittel in jeder Betriebsstellung des bekannten Systems bezüglich ihrer Oberflächennormalen paarweise antiparallel zueinander ausgerichtet sind. Eine Fokussierung des Lichtstrahls erfolgt nicht.

### AUFGABE DER ERFINDUNG

Der Erfindung liegt die Aufgabe zugrunde, eine Vorrichtung mit den Merkmalen des Oberbegriffs des unabhängigen Patentanspruchs 1 und ein Verfahren mit den Merkmalen des Oberbegriffs des unabhängigen Patentanspruchs 8 aufzuzeigen, mit denen es ohne großen praktischen oder apparativen Aufwand möglich ist, den Lichtstrahl um einen festen Drehpunkt in der Pupille der fokussierenden Optik in zwei Richtungen zu verdrehen, um den zweidimensionalen Abtastbereich ohne Variation der optischen Verhältnisse über dem Abtastbereich abzutasten.

### LÖSUNG

Die Aufgabe der Erfindung wird durch eine Vorrichtung mit den Merkmalen des unabhängigen Patentanspruchs 1 und durch ein Verfahren mit den Merkmalen des unabhängigen Patentanspruchs 8 gelöst. Bevorzugte Ausführungsformen der neuen Vorrichtung sind in den abhängigen Patentansprüchen 2 bis 7 beschrieben, während die abhängigen Patentansprüche 9 bis 15 bevorzugte Ausführungsformen des neuen Verfahrens betreffen.

### BESCHREIBUNG DER ERFINDUNG

Bei der neuen Vorrichtung sind je Richtung, in der der Lichtstrahl gegenüber der optischen Achse der fokussierenden Optik abgelenkt werden soll, um ihn in dieser Richtung innerhalb des Abtastbereichs zu verschieben, mindestens und auch vorzugsweise zwei Strahlablenkungsmittel hintereinander geschaltet. Die beiden Strahlablenkungsmittel lenken den Lichtstrahl zwar in derselben Ebene, aber an zwei hintereinander liegenden Punkten um jeweils einen Ablenkwinkel ab. Dabei sind diese beiden Ablenkwinkel unabhängig voneinander dynamisch veränderbar. Aus der Kombination der unabhängigen dynamischen Veränderbarkeit der beiden Ablenkwinkel heraus kann sowohl die Strahllage des Lichtstrahls in der jeweiligen Richtung in der Pupille der fokussierenden Optik als auch der Winkel des Lichtstrahls zu der optischen Achse der fokussierenden Optik und damit die Lage des fokussierten Lichtstrahls in dem Abtastbereich eingestellt werden. Dies bedeutet insbesondere, dass die Strahllage in der Pupille beim Abtasten des Abtastbereichs festgehalten werden kann. Diese Möglichkeit besteht für beide Richtungen, in denen der Lichtstrahl abgelenkt werden muss, um den Abtastbereich abzutasten, grundsätzlich unabhängig davon, wie nahe die Ablenkmittel von der Pupille oder einer Pupillenabbildung der fokussierenden Optik entfernt sind. Die Ablenkmittel können damit insbesondere an einer sowieso freien Stelle des Strahlengangs angeordnet werden. Es muss für sie kein extra Platz geschaffen und insbesondere müssen für sie keine extra Pupillenabbildungen durchgeführt werden.

Durch die mit Hilfe der zwei unabhängig voneinander wirkenden Strahlablenkungsmittel bereitgestellten Freiheitsgrade sind nicht nur Abstände der Ablenkungsmittel zu der Pupille oder einer Pupillenabbildung der fokussierenden Optik kompensierbar, sondern auch Linsenfehler der fokussierenden Optik und/oder Fehler der Strahlablenkungsmittel selbst. Das heißt, bei der neuen Vorrichtung sind die Kriterien des Verschwenkens des Lichtstrahls um einen festen Punkt in der Pupille der Optik sogar genauer einzuhalten als mit einem idealen Spiegel in deren Pupille, da ein solcher Spiegel Abbildungsfehler der Optik anders als die hintereinander geschalteten zwei Strahlablenkungsmittel je Richtung nicht kompensieren kann. Mit der erfindungsgemäßen Vorrichtung kann der Drehpunkt des abgelenkten Lichtstrahls auch gezielt in axialer Richtung vorgegeben, beziehungsweise verlegt werden, um so z. B. unterschiedliche axiale Lagen verschiedener Objektive zu berücksichtigen.

Um diese Kompensationsmöglichkeiten auszunutzen, ist eine Steuerung für die Strahlablenkungsmittel vorgesehen, die die vier Ablenkwinkel der insgesamt mindestens vier Strahlablenkungsmittel für jeden Punkt des Abtastbereichs festlegt. Dabei gehört zu jedem Punkt des Abtastbereichs ein fester Wert für jeden der vier Ablenkwinkel. Insoweit sind die vier Ablenkwinkel untereinander korreliert. Sie ändern sich jedoch beim Abtasten des Abtastbereichs nicht in festen Beziehungen zueinander, sondern so, dass jeweils für jeden Punkt die idealen vier Ablenkwinkel eingestellt werden.

Die idealen Ablenkwinkel für jeden Punkt des Abtastbereichs werden von der Steuerung so festgelegt, dass der Lichtstrahl immer an derselben Stelle durch die Pupille der fokussierenden Optik verläuft. Vorzugsweise verläuft er mit seinem Schwerpunkt durch das Zentrum der Pupille.

Die beim Abtasten des Abtastbereichs aufeinander folgenden Werte der vier Ablenkwinkel werden von der Steuerung vorzugsweise so festgelegt, dass der Abtastbereich mit dem fokussierten Lichtstrahl in einem vorgegebenen Muster abgetastet wird. Dieses vorgegebene Muster besteht z. B. aus exakt parallelen Linien gleichen Abstands, längs derer der fokussierte Laserstrahl mit konstanter Geschwindigkeit bewegt wird. Ein solches verzerrungsfreies Muster erlaubt es, ein aus dem Bereich des fokussierten Lichtstrahls kommendes Messsignal allein aufgrund seines Zeitpunkts exakt einem bestimmten Ort des Abtastbereichs zuzuordnen.

Um bei der erfindungsgemäßen Vorrichtung die Werte der vier Ablenkwinkel für jeden Punkt des Abtastbereichs zu gewinnen, können eine Strahllageerfassungseinrichtung zur Erfassung einer Strahllage in der Pupille oder einer Abbildung der Pupille der Optik und eine weitere Strahllageerfassungseinrichtung zur gleichzeitigen Erfassung einer Strahllage in dem Abtastbereich oder einer Abbildung des Abtastbereichs vorgesehen sein. So kann überwacht werden, dass die Strahllage in der Pupille konstant bleibt und den dabei eingestellten Ablenkwinkeln eine bestimmte Strahllage in dem Abtastbereich zugeordnet wird. Hieraus können in umgekehrter Richtung die Abfolgen der Werte der vier Ablenkwinkel festgelegt werden, die erforderlich sind, um den Abtastbereich in einem gewünschten Muster abzutasten.

Die Strahlablenkungsmittel der erfindungsgemäßen Vorrichtung können grundsätzlich an beliebiger Stelle auf den Lichtstrahl einwirken, um diesen abzulenken. Verschiedene Stellen des Lichtstrahls erweisen sich jedoch als besonders günstig, um den Lichtstrahl genau in der hier gewünschten Weise abzulenken. Hierzu zählen alle Stellen, an denen der Lichtstrahl kollimiert ist. Anders als bei dem aus der US 2006/0151449 A1 bekannten Verfahren wird ein kollimierter Lichtstrahl bei der vorliegenden Erfindung jedoch gegenüber der optischen Achse der ihn anschließend fokussierenden Optik verkippt, um das Kriterium einzuhalten, dass der Lichtstrahl immer an derselben Stelle durch die Pupille der Optik verläuft.

Wenn die Strahlablenkungsmittel der erfindungsgemäßen Vorrichtung auf einen zuvor fokussierten Lichtstrahl einwirken, verschieben sie den fokussierten Lichtstrahl gegenüber der optischen Achse der Optik lateral, um dasselbe Kriterium einzuhalten. Die hierbei auftretende Änderung der Strahllänge des Lichtstrahls wirkt sich jedoch nicht in eine axiale Verlagerung des Fokus des Lichtstrahls von gleicher Größe aus. Die effektive laterale Verlagerung des Fokus ist proportional zur Bildverkleinerung der fokussierenden Optik zwischen den Strahlablenkungsmitteln und dem Fokus des Lichtstrahls. Die axiale Verlagerung des Fokus ist hingegen proportional zum Quadrat der Bildverkleinerung. Das bedeutet, dass bei der vorliegenden Vorrichtung der axiale Fokusfehler im Objektraum um den Vergrößerungsfaktor der Optik zwischen dem Objektraum und den Strahlablenkungsmitteln reduziert ist. In einem Mikroskop mit einem beispielsweise 100-fach vergrößernden Objektiv, durch das hindurch der Lichtstrahl in Verkleinerungsrichtung fokussiert wird, wird der im Objektraum wirksame axiale Fokusfehler, der durch die laterale Auslenkung des Lichtstrahls verursacht wird, auf ein Hundertstel und damit auf vernachlässigbar kleine Werte reduziert.

Bei zuvor fokussiertem Lichtstrahl können die Strahlablenkungsmittel um eine Abbildung der Pupille der Optik herum angeordnet sein, wobei nichts dagegen spricht, eines der Strahlablenkungsmittel genau in der Pupillenabbildung vorzusehen. Besonders günstig ist es bei der erfindungsgemäßen Vorrichtung jedoch, dass die Strahlablenkungsmittel auch um ein Zwischenbild des Abtastbereichs herum angeordnet sein können, wobei auch hier eines der Strahlablenkungsmittel genau in dem Zwischenbild angeordnet sein kann. Ein solches Zwischenbild ist in Rastermikroskopen häufig frei zugänglich, was die typische Größe von Strahlablenkungsmitteln z. B. in Form galvanometergetriebener Drehspiegel anbelangt. Derartige Drehspiegel sind bei der erfindungsgemäßen Vorrichtung vorzugsweise so ausgebildet, dass sie um eine in ihrer Spiegelebene verlaufende Schwenkachse verschwenkbar sind. Die beiden Strahlablenkungsmittel jeder Richtung in Form von Drehspiegeln sind dann entsprechend um parallele Schwenkachsen verschwenkbar.

Bei dem erfindungsgemäßen Verfahren wird der Lichtstrahl je Richtung, in der der Abtastbereich abzutasten ist, an zwei hintereinander liegenden Punkten um zwei sich unabhängig voneinander dynamisch verändernde Ablenkwinkel abgelenkt. Dabei wird der Lichtstrahl um die insgesamt vier Ablenkwinkel vorzugsweise so abgelenkt, dass er immer an derselben Stelle durch die Pupille der ihn fokussierenden Optik hindurch tritt. Weiter ist es bevorzugt, dass der Lichtstrahl um die insgesamt vier Ablenkwinkel so abgelenkt wird, dass der Abtastbereich mit dem fokussierten Lichtstrahl in einem vorgegebenen verzerrungsfreien Muster abgetastet wird. Um dies zu ermöglichen, müssen die vier Ablenkwinkel für jeden Punkt des Abtastbereichs bestimmt und gespeichert werden, weil ihre Idealwerte auch Abbildungsfehler der Optik und Fehler der zum Ablenken des Lichtstrahls verwendeten Ablenkmittel berücksichtigen. Um die vier Ablenkwinkel für jeden Punkt des Abtastbereichs zu bestimmen, kann eine Strahllage des Lichtstrahls in der Pupille oder eine Abbildung der Pupille erfasst werden, um sie konstant zu halten, während gleichzeitig eine Strahllage in dem Abtastbereich oder einer Abbildung des Abtastbereichs erfasst wird, um für die jeweils eingestellten Ablenkwinkel den mit dem Lichtstrahl erreichten Ort des Abtastbereichs zu erfassen. Hieraus kann dann in umgekehrter Richtung eine Abfolge der vier Ablenkwinkel festgelegt werden, um den Abtastbereich in einem gewünschten Muster abzutasten.

Bereits im Zusammenhang mit der erfindungsgemäßen Vorrichtung wurde darauf hingewiesen, dass bei der vorliegenden Erfindung der Ort des Ablenkens des Lichtstrahls nicht besonders kritisch ist, wenn auch bestimmte Orte hierfür bevorzugt sind. Dazu zählen die Bereiche, in denen der Lichtstrahl kollimiert ist. Ein weiterer günstiger Ort liegt bei der Pupille der Optik (falls zugänglich) oder jeder Abbildung der Pupille der Optik. Insbesondere ist es aber mit der vorliegenden Erfindung auch möglich, die Ablenkung des Lichtstrahls im Bereich eines Zwischenbilds des Abtastbereichs vorzunehmen und dennoch den effektiven Drehpunkt des Lichtstrahls gegenüber der optischen Achse der fokussierenden Optik in die Pupille zu verschieben.

Während die vorliegende Erfindung nicht auf bestimmte Anwendungen beschränkt ist, erweist sie sich doch bei der hochauflösenden Rasterlichtmikroskopie als besonders vorteilhaft, wenn das elektrische Feld bei mindestens einer Komponente des kohärenten Lichtstrahls derart moduliert wird, dass das Integral des elektrischen Felds über der Pupille der fokussierenden Optik null ist. Dieses Kriterium für das Integral des elektrischen Felds, mit dem z. B. eine Intensitätsverteilung eines Stimulationslaserstrahls bei der STED-Mikroskopie eingestellt wird, die eine Nullstelle am geometrischen Fokuspunkt des Lichtstrahls aufweist, ist extrem empfindlich gegenüber einem mit der vorliegenden Erfindung leicht vermeidbaren Versatz des Lichtstrahls gegenüber der Pupille der fokussierenden Optik. Dabei ist die vorliegende Erfindung nicht auf sehr hochwertige optische Bauteile für die fokussierende Optik oder die Strahlablenkungsmittel angewiesen, weil durch den Freiheitsgrad aufgrund der jeweils zwei Strahlablenkungen je Richtung, in der der Abtastbereich abgetastet wird, alle auftretenden Fehler kompensiert werden können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von bevorzugten Ausführungsbeispielen unter Bezugnahme auf die beigefügten Zeichnungen näher erläutern und beschrieben.
- **Fig. 1**: zeigt eine Anordnung von vier galvanometergetriebenen Drehspiegeln, wie sie bei der vorliegenden Erfindung als Strahlablenkungsmittel zur Anwendung kommen können.
- **Fig. 2**: skizziert ein konfokales Lichtrastermikroskop, bei dem die Erfindung im Bereich einer Abbildung der Pupille der fokussierenden Optik realisiert ist.
- **Fig. 3**: zeigt den Aufbau eines STED-Rasterlichtmikroskops, bei dem die Erfindung im Bereich eines Zwischenbilds der fokussierenden Optik realisiert ist.
- **Fig. 4**: skizziert ein Lichtrastermikroskop mit Detektion im Durchlichtverfahren, bei dem die Erfindung im Bereich einer Abbildung der Pupille der fokussierenden Optik realisiert ist; und
- **Fig. 5**: skizziert die aufgrund der Erfindung gegebene Möglichkeit eines adaptiven Abtastverfahrens.

### FIGURENBESCHREIBUNG

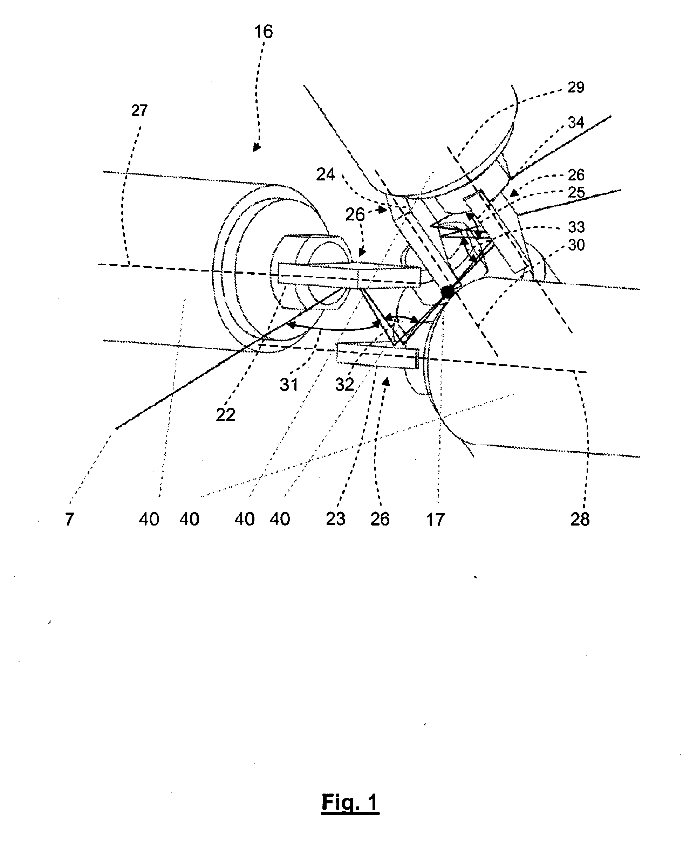

**Fig. 1** zeigt eine Scananordnung 16 von vier jeweils durch ein Galvanometer 40 getriebenen Drehspiegeln 22 bis 25, die bei der vorliegenden Erfindung als Strahlablenkungsmittel 26 für einen Lichtstrahl 7 zum Einsatz kommen können. Dabei lenken jeweils zwei Ablenkungsmittel 26, hier die Drehspiegel 22 und 23 einerseits und die Drehspiegel 24 und 25 andererseits, den Lichtstrahl 7 in zwei aufeinander folgenden Punkten um Ablenkwinkel 31 und 32 bzw. 33 und 34, in jeweils einer Richtung um, d. h. die Ablenkwinkel 31 und 32 einerseits und die Ablenkwinkel 33 und 34 andererseits liegen im Wesentlichen in einer Ebene. Dazu sind die Drehspiegel 22 und 23 um zwei parallele Schwenkachsen 27 und 28 verschwenkbar, während die Drehspiegel 24 und 25 um zwei zu den Schwenkachsen 27 und 28 im Wesentlichen orthogonal und zueinander parallel verlaufende weitere Schwenkachsen 29 und 30 verschwenkbar sind. Alle Schwenkbewegungen der Drehspiegel 22 bis 25 um die Schwenkachsen 27 bis 30 sind dabei unabhängig voneinander möglich. Dadurch ist nicht nur die Winkellage des austretenden Lichtstrahls 7 zu der optischen Achse einer sich an die Scananordnung 16 anschließenden, den Lichtstrahl 7 fokussierenden Optik in beiden lateralen Richtungen einstellbar, sondern auch die Lage des Drehpunkts des Lichtstrahls 7 in Längsrichtung der optischen Achse. So kann dieser Drehpunkt durch die Ansteuerung der Ablenkmittel 26 bei allen Veränderungen der Winkellage des Lichtstrahls 7 ortsfest gehalten werden. Insbesondere kann er an dem Ort einer Abbildung 17 der Pupille der sich anschließenden fokussierenden Optik festgehalten werden. Dies ist besonders einfach möglich, wenn die Ablenkmittel 26 um diesen Ort der Abbildung 17 herum angeordnet sind, wie dies in Fig. 1 dargestellt ist. Die in Fig. 1 als Strahlablenkungsmittel 26 wiedergegebenen galvanometergetriebenen Drehspiegel 22 bis 25 sind nur ein konkretes Beispiel für die Umsetzung der vorliegenden Erfindung. Alternativ können als Strahlablenkungsmittel 26 auch akustooptische oder elektrooptische Strahlablenkungsmittel, piezoelektrisch angetriebene Spiegel, sogenannte MEMS (Micro-Electro-Mechanical-Systems) und dergleichen eingesetzt werden.

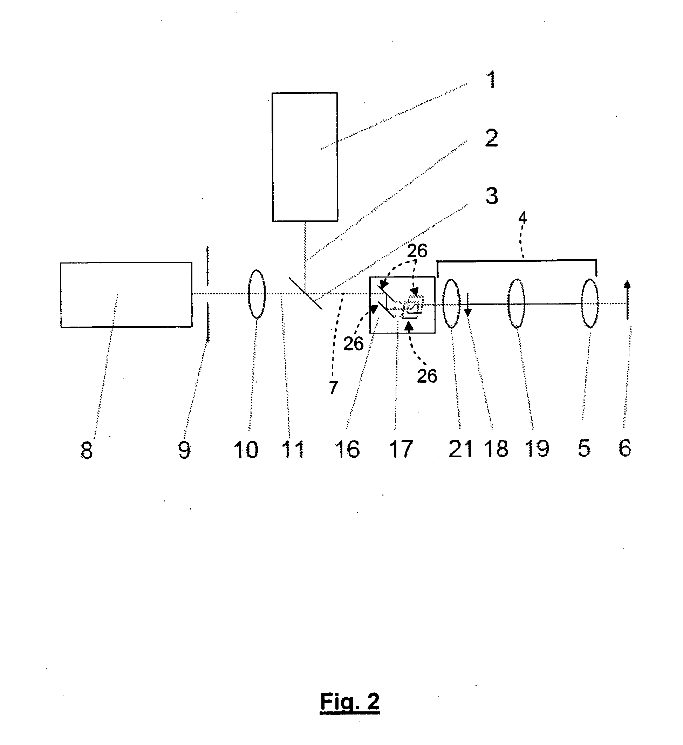

**Fig. 2** skizziert die Integration der Scananordnung 16 in ein konfokales Rasterlichtmikroskop. Ein Fluoreszenzanregungslaser 1 gibt einen Fluoreszenzanregungslaserstrahl 2 ab, der über einen Farbstrahlteiler 3 als Lichtstrahl 7 durch die Scanneranordnung 16 in eine fokussierende Optik 4 gelenkt wird, die ihn in ein Objekt 6 fokussiert. Die fokussierende Optik 4 ist hier aus einer Abtastlinse 21, einer Tubuslinse 19 und einem Objektiv 5 aufgebaut und bildet das Objekt 6 in einem Zwischenbild 18 ab. Das von dem Objekt 6 zurücklaufende Detektionslicht 11 wird von der Scananordnung 16 entscannt und von einem Detektor 8 in konfokaler Anordnung erfasst, die durch eine Fokussierlinse 10 und eine dahinter angeordnete Lochblende 9 realisiert ist.

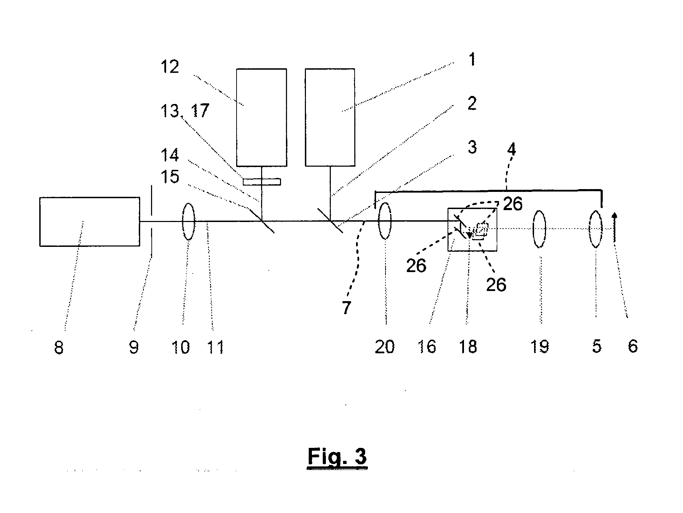

Das in **Fig. 3** skizzierte STED-Fluoreszenzlichtmikroskop erfasst das Detektionslicht 11 von dem Objekt 6 ebenfalls mit dem Detektor 8 in konfokaler Anordnung hinter der Fokussierlinse 10 und der Lochblende 9. Hier ist zusätzlich zu dem Aufbau gemäß Fig. 2 ein Stimulationslaser 12 vorgesehen, der einen Stimulationslaserstrahl 14 abgibt. Der Stimulationslaserstrahl 14 bildet hier eine weitere Komponente des Lichtstrahls 7 aus und wird dazu über einen weiteren Farbstrahlteiler 15 eingekoppelt. Zuvor wird jedoch das elektrische Feld des Stimulationslaserstrahls 14 in der Abbildung 17 der Pupille der Optik 4 mit einer Phasenplatte 13 derart moduliert, dass das Integral des elektrischen Felds über dieser Abbildung 17 der Pupille null ist. Wenn diese Bedingung exakt eingehalten wird, weist die Intensitätsverteilung des Stimulationslaserstrahls 14 an dem geometrischen Fokuspunkt des Lichtstrahls 7 in dem Objekt 6 eine Nullstelle auf, an der er die Anregung von Fluoreszenzfarbstoff in dem Objekt 6 durch den Anregungslaserstrahl 2 anders als in der Umgebung des geometrischen Fokuspunkts nicht auslöscht. Hierdurch wird der räumliche Bereich, aus dem das Detektionslicht 11 stammen kann, bis unter die Beugungsgrenze eingegrenzt. Weiterhin ist in Fig. 3 abweichend von Fig. 2 die Scananordnung 16 nicht um die Abbildung 17 der Pupille der Optik 4 herum angeordnet, sondern um das Zwischenbild 18. Dieser Bereich ist bei einem Rasterlichtmikroskop üblicherweise besonders gut zugänglich. Durch die Freiheitsgrade der Scanneranordnung 16 bezüglich der Lage des Drehpunkts, um den herum der Lichtstrahl 7 effektiv verdreht wird, kann dieser Drehpunkt trotzdem in der hier nicht eingezeichneten Pupille der Optik 4 liegen, damit die Bedingung, dass das Integral des elektrischen Felds des Stimulationslaserstrahls 14 über die Pupille der fokussierenden Optik Null ist, auch beim Abtasten des Objekts 6 erhalten bleibt. Durch die Verlagerung der Scanneranordnung 16 ist die erste Linse der fokussierenden Optik 4 hier keine Abtastlinse im engeren Sinne und wird hier daher als Kollimationslinse 20 bezeichnet.

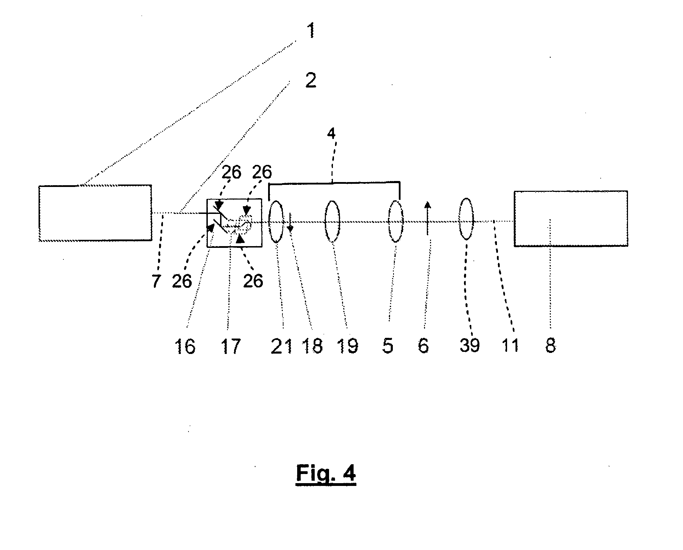

Das in **Fig. 4** skizzierte Rasterlichtmikroskop weist den Detektor 8 in Durchlichtanordnung hinter dem Objekt 6 und einem weiteren Objektiv 39 auf. Das heißt, das Detektionslicht 11 von dem Objekt 6 wird hier nicht mit der Scanneranordnung 16 entscannt. Entsprechend befindet sich der Detektor 8 nicht in einer konfokalen Anordnung, sondern kann ein zweidimensionales Sensorarray zur Aufzeichnung einer Abbildung des Objekts 6 aufweisen, wobei die räumliche Zuordnung über die Bildpunkte des Sensorarrays erfolgt. Ansonsten entspricht der Aufbau des Rasterlichtmikroskops gemäß Fig. 4 demjenigen gemäß Fig. 2.

Für jeden abzutastenden Punkt des Objekts 6 sind die vier Ablenkwinkel 31 bis 34 gemäß Fig. 1 zu ermitteln, mit denen die Bedingungen erfüllt werden, dass der gewünschte Punkt im Objektraum getroffen wird und dass der Lichtstrahl 7 durch das Zentrum der Pupille der fokussierenden Optik 4 verläuft. Diese Ablenkwinkelquadrupel sind mit herkömmlichen Mitteln bestimmbar und in einer zugehörigen Steuerung für die Strahlablenkungsmittel 26, die hier nicht separat dargestellt sind, speicher- und nutzbar. So können z. B. in einer Kalibierphase oder auch während des jeweiligen Abbildungsprozesses Detektoren, wie beispielsweise VierQuadrantendioden, positionssensitive Dioden, CCD-Kameras oder dergleichen in die Pupille bzw. den Objektraum oder Abbilder derselben eingebracht werden, um die notwendigen Ansteuerraten oder Funktionen derselben zu ermitteln und zu speichern. Im Allgemeinen werden diese dann bei der eigentlichen Objektabbildung genutzt, um die für die Strahlablenkungsmittel notwendigen Ablenkwinkelquadrupel Punkt für Punkt oder auch interpolierend festzulegen. Dabei ist eine punktweise Bestimmung der interpolierenden Festlegung vorzuziehen, da eine Interpolation von zumindest stetigen Verhältnissen ausgeht, die beispielsweise bei lokalen Abbildungsfehlern nicht vorliegen müssen. Die Kalibrierung eliminiert so weitgehend sowohl optische Abbildungsverzeichnungen, wie auch durch mechanische Ungenauigkeiten im Aufbau verursachte Ungenauigkeiten der Strahllagen. Durch die Anwendung der Erfindung werden die Anforderungen an die inhärenten Genauigkeiten der verwendeten Teile, wie auch beim opto-mechanischen Systemaufbau und bei der Justage wesentlich reduziert.

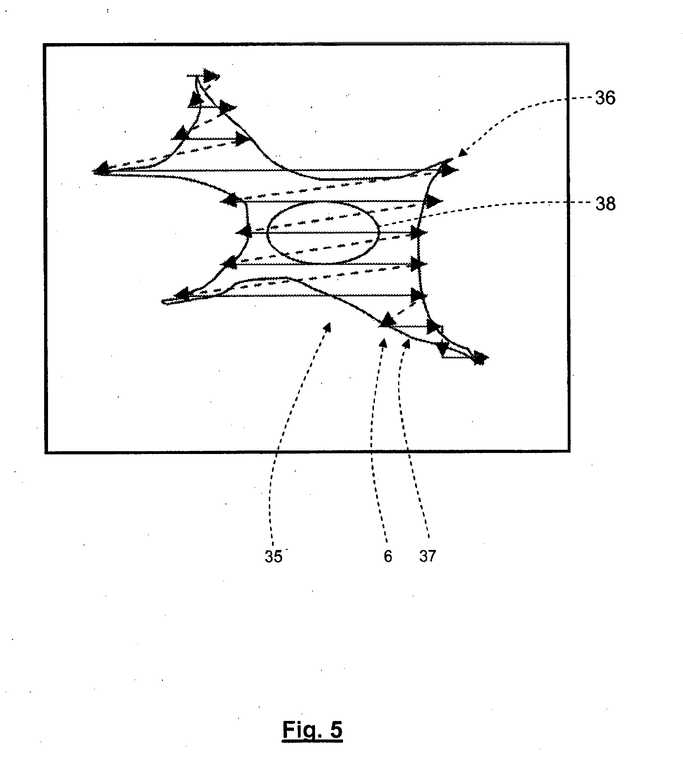

Gleichzeitig wird im Betrieb eine wesentlich präzisere Strahlkontrolle möglich. So sind bei Verwendung von kleinen Drehspiegeln 22 bis 25 mit geringer Trägheit als Strahlablenkungsmittel 26 schnelle adaptive Rastermuster 36, in denen der jeweilige Abtastbereich 35 des Objekts 6 mit dem fokussierten Lichtstrahl 7 abgetastet wird, möglich. Auf diese Weise können beispielsweise dunkle Hintergrundbereiche oder aus anderen Gründen uninteressante Objektbereiche ausgelassen werden, um durch die reduzierte Bildpunkteanzahl eine höhere Bildwiederholungsrate zu erreichen. Dies ist in Fig. 5 skizziert, wo das Rastermuster 36 in dem Abtastbereich 35 so adaptiert ist, dass es eine Zelle 37 mit einem Kern 38 als Objekt 6 zwar abdeckt, aber nicht signifikant darüber hinausgeht

### BEZUGSZEICHENLISTE

| | | | |
|---|---|---|---|
| 1 | Fluoreszenzanregungslaser | 31 | Ablenkwinkel |
| 2 | Fluoreszenzanregungslaserstrahl | 32 | Ablenkwinkel |
| 3 | Farbstrahlteiler | 33 | Ablenkwinkel |
| 4 | fokussierende Optik | 34 | Ablenkwinkel |
| 5 | Objektiv | 35 | Abtastbereich |
| 6 | Objekt | 36 | Muster |
| 7 | Lichtstrahl | 37 | Zelle |
| 8 | Detektor | 38 | Kern |
| 9 | Lochblende | 39 | Objektiv |
| 10 | Fokussierlinse | 40 | Galvanometer |
| 11 | Detektionslicht | | |
| 12 | Stimulationslaser | | |
| 13 | Phasenplatte | | |
| 14 | Stimulationslaserstrahl | | |
| 15 | Farbstrahlteiler | | |
| 16 | Scanneranordnung | | |
| 17 | Abbild der Pupille | | |
| 18 | Zwischenbild | | |
| 19 | Tubuslinse | | |
| 20 | Koordinationslinse | | |
| 21 | Abtastlinse | | |
| 22 | Drehspiegel | | |
| 23 | Drehspiegel | | |
| 24 | Drehspiegel | | |
| 25 | Drehspiegel | | |
| 26 | Strahlablenkungsmittel | | |
| 27 | Schwenkachse | | |
| 28 | Schwenkachse | | |
| 29 | Schwenkachse | | |
| 30 | Schwenkachse | | |

## Patentansprüche

1. Vorrichtung zur dynamischen Verlagerung eines Lichtstrahls (7) gegenüber einer den Lichtstrahl (7) fokussierenden, eine Pupille aufweisenden Optik (4), um mit dem fokussierten Lichtstrahl (7) ein Objekt (6) in einem zweidimensionalen Abtastbereich (35) abzutasten, wobei die Vorrichtung Strahlablenkungsmittel (26) aufweist, die den Lichtstrahl (7) gegenüber der optischen Achse der Optik (4) in zwei verschiedenen Richtungen um dynamisch veränderbare Ablenkwinkel (31-34) ablenken, wobei je Richtung mindestens zwei Strahlablenkungsmittel (26) hintereinander geschaltet sind, die den Lichtstrahl (7) um zwei dynamisch veränderbare Ablenkwinkel (31, 32 bzw. 33, 34) ablenken, **dadurch gekennzeichnet, dass** die beiden Ablenkwinkel (31, 32 bzw. 33, 34), um die die beiden Strahlablenkungsmittel (26) den Lichtstrahl je Richtung ablenken, unabhängig voneinander veränderbar sind, so dass sowohl die Strahllage des Lichtstrahls (7) in der jeweiligen Richtung in der Pupille der fokussierenden Optik (4) als auch der Winkel des Lichtstrahls (7) zu der optischen Achse der fokussierenden Optik (4) und damit die Lage des fokussierten Lichtstrahls (7) in dem Abtastbereich einstellbar ist, und eine Steuerung für die Strahlablenkungsmittel (26) vorgesehen ist, die die vier Ablenkwinkel (31 bis 34) für jeden Punkt des Abtastbereichs (35) so festlegt, dass der Lichtstrahl (7) immer an derselben Stelle durch die Pupille der Optik (4) verläuft.

2. Vorrichtung nach Anspruch 1, **dadurch gekennzeichnet, dass** die Steuerung die vier Ablenkwinkel (31 bis 34) auf solche aufeinanderfolgende Werte festlegt, dass der Abtastbereich (35) mit dem fokussierten Lichtstrahl (7) in einem vorgegebenen Muster (36) abgetastet wird.

3. Vorrichtung nach mindestens einem der vorhergehenden Ansprüche, **dadurch gekennzeichnet, dass** eine Strahllageerfassungseinrichtung zur Erfassung einer Strahllage in der Pupille oder einer Abbildung (17) der Pupille der Optik (4) und eine weitere Strahllageerfassungseinrichtung zur gleichzeitigen Erfassung einer Strahllage in dem Abtastbereich (35) oder einer Abbildung des Abtastbereichs vorgesehen sind.

4. Vorrichtung nach mindestens einem der vorhergehenden Ansprüche, **dadurch gekennzeichnet, dass** die Optik (4) den Lichtstrahl (7) vor seinem Auftreffen auf die Strahlablenkungsmittel (26) kollimiert und dass die Strahlablenkungsmittel den kollimierten Lichtstrahl (7) gegenüber der optischen Achse der Optik (4) verkippen.

5. Vorrichtung nach mindestens einem der vorhergehenden Ansprüche 1 bis 3, **dadurch gekennzeichnet, dass** die Optik (4) den Lichtstrahl (7) vor seinem Auftreffen auf die Strahlablenkungsmittel (26) fokussiert und dass die Strahlablenkungsmittel den fokussierten Lichtstrahl (7) gegenüber der optischen Achse der Optik (4) lateral verschieben.

6. Vorrichtung nach Anspruch 5, **dadurch gekennzeichnet, dass** die Strahlablenkungsmittel (26) um eine Abbildung (17) der Pupille der Optik (4) herum oder um ein Zwischenbild (18) des Abtastbereichs (35) herum angeordnet sind.

7. Vorrichtung nach mindestens einem der vorhergehenden Ansprüche, **dadurch gekennzeichnet, dass** die Strahlablenkungsmittel (26) Drehspiegel (22 bis 25) umfassen, die um eine in ihrer Spiegelebene oder parallel dazu verlaufende Schwenkachse (27 bis 30) verschwenkbar sind.

8. Verfahren zur dynamischen Verlagerung eines Lichtstrahls gegenüber einer den Lichtstrahl fokussierenden Optik, um ein Objekt mit dem fokussierten Lichtstrahl in einem zweidimensionalen Abtastbereich abzutasten, insbesondere unter Verwendung einer Vorrichtung nach mindestens einem der vorhergehenden Ansprüche, wobei der Lichtstrahl gegenüber der optischen Achse der Optik in zwei verschiedenen Richtungen um sich dynamisch ändernde Ablenkwinkel abgelenkt wird, **dadurch gekennzeichnet, dass** der Lichtstrahl (7) je Richtung an zwei hintereinander liegenden Punkten um zwei sich unabhängig voneinander dynamisch verändernde Ablenkwinkel (31 bis 34) so abgelenkt wird, dass der Lichtstrahl (7) immer an derselben Stelle durch die Pupille der Optik (4) verläuft.

9. Verfahren nach Anspruch 8, **dadurch gekennzeichnet, dass** der Lichtstrahl (7) derart abgelenkt wird, dass er mit seinem Schwerpunkt durch das Zentrum der Pupille der Optik (4) verläuft.

10. Verfahren nach Anspruch 8 oder 9, **dadurch gekennzeichnet, dass** der Lichtstrahl (7) um die vier Ablenkwinkel (31 bis 34) so abgelenkt wird, dass der Abtastbereich (35) mit dem fokussierten Lichtstrahl (7) in einem vorgegebenen Muster (36) abgetastet wird.

11. Verfahren nach Anspruch 9, **dadurch gekennzeichnet, dass** zuvor die vier Ablenkwinkel (31 bis 34) für jeden Punkt des Abtastbereichs (35) bestimmt und gespeichert werden, wobei eine Strahllage in der Pupille oder einer Abbildung (17) der Pupille der Optik (4) und eine Strahllage in dem Abtastbereich (35) oder einer Abbildung des Abtastbereichs gleichzeitig erfasst werden.

12. Verfahren nach mindestens einem der vorhergehenden Ansprüche 8 bis 11, **dadurch gekennzeichnet, dass** der Lichtstrahl (7) vor dem Ablenken kollimiert und durch das Ablenken gegenüber der optischen Achse der Optik (4) verkippt wird.

13. Verfahren nach mindestens einem der vorhergehenden Ansprüche 8 bis 11, **dadurch gekennzeichnet, dass** der Lichtstrahl (7) vor dem Ablenken fokussiert und durch das Ablenken gegenüber der optischen Achse der Optik (4) lateral verschoben wird.

14. Verfahren nach Anspruch 13, **dadurch gekennzeichnet, dass** der Lichtstrahl (7) in Punkten abgelenkt wird, die um eine Abbildung (17) der Pupille der Optik (4) herum oder um ein Zwischenbild (18) des Abtastbereichs (35) herum angeordnet sind

15. Verfahren nach mindestens einem der vorhergehenden Ansprüche 8 bis 14, **dadurch gekennzeichnet, dass** das elektrische Feld bei mindestens einer Komponente des kohärenten Lichtstrahls (7) derart moduliert wird, dass das Integral des elektrischen Felds über der Pupille der fokussierenden Optik (4) null ist.

## Claims

1. Apparatus for dynamically shifting a light beam (7) with regard to an optic (4) focussing the light beam (7) and comprising a pupil to scan an object (6) with the focussed light beam (7) in a two-dimensional scanning range (35), wherein the apparatus comprises beam deflectors (26) which deflect the light beam (7) in two different directions with regard to the optical axis of the optic (4) by dynamically variable deflection angles (31-34), wherein, per each direction, at least two beam deflectors (26) are connected in series which deflect the light beam (7) by two dynamically variable deflection angles (31, 32 and 33, 34, respectively), **characterized in that** the two deflection angles (31, 32 and 33, 34, respectively), about which the two beam deflectors (26) deflect the light beam per each direction, are dynamically variable independently on each other such that both the beam position of the light beam (7) in the respective direction within the pupil of the focussing optic (4) and the angle of the light beam (7) with regard to the optical axis of the focussing optic (4) and thus the position of the focussed light beam (7) in the scanning range are adjustable, and **in that** a controller for the beam deflectors (26) is provided, which sets the four deflection angles (31 to 34) for each point of the scanning range (35) in such a way that the light beam (7) runs through the pupil of the optic (4) always at the same point.

2. Apparatus according to claim 1, **characterized in that** the controller sets the four deflection angles (31 to 34) at such values following each other that the scanning range (35) is scanned with the focussed light beam (7) in a predetermined pattern (36).

3. Apparatus according to at least one of the preceding claims, **characterized in that** a beam position determination device for determining a beam position in the pupil or in an image (17) of the pupil of the optic (4) and a further beam position determination device for simultaneously determining a beam position in the scanning range (35) or in an image of the scanning range are provided.

4. Apparatus according to at least one of the preceding claims, **characterized in that** the optic (4) collimates the light beam (7) prior to its incident on the beam deflectors (26), and **in that** the beam deflectors tilt the collimated light beam (7) with regard to the optical axis of the optic (4).

5. Apparatus according to at least one of the preceding claims 1 to 3, **characterized in that** the optic (4) focuses the light beam (7) prior to its incident on the beam deflectors (26) and that the beam deflectors laterally translate the focussed light beam (7) with regard to the optical axis of the optic (4).

6. Apparatus according to claim 5, **characterized in that** the beam deflectors (26) are arranged around an image (17) of the pupil of the optic (4) or around an intermediate image (18) of the scanning range (35).

7. Apparatus according to at least one of the preceding claims, **characterized in that** the beam deflectors (26) include pivoting mirrors (22 to 25) which are pivotable about a pivoting axis (27 to 30) running within its mirror plane or in parallel thereto.

8. Method of dynamically shifting a light beam with regard to an optic focusing the light beam to scan an object with the focussed light beam in a two-dimensional scanning range, particularly using the apparatus according to at least one of the preceding claims, wherein the light beam is deflected with regard to the optical axis of the optic in two different directions by dynamically varying deflection angles, **characterized in that**, per each direction, the light beam (7) is deflected at two points following each other by two deflection angles (31 to 34) dynamically varying independently on each other in such a way that the light beam (7) runs through the pupil of the optic (4) always at the same point.

9. Method according to claim 8, **characterized in that** the light beam (7) is deflected in such a way that it, with its centre of intensity, runs through the centre of the pupil of the optic (4).

10. Method according to claim 8 or 9, **characterized in that** the light beam (7) is deflected by the four deflection angles (31 to 34) in such a way that the scanning range (35) is scanned with the focussed light beam (7) in a predetermined pattern (36).

11. Method according to claim 9, **characterized in that**, initially, the four deflection angles (31 to 34) are determined and stored for each point of the scanning range (35), wherein a beam position in the pupil or in an image (17) of the pupil of the optic (4) and a beam position in the scanning range (35) or in an image of the scanning range are recorded simultaneously.

12. Method according to at least one of the preceding claims 8 to 11, **characterized in that** the light beam (7) is collimated prior to being deflected and tilted with regard to the optical axis of the optic (4) by being deflected.

13. Method according to at least one of the preceding claims 8 to 11, **characterized in that** the light beam (7) is focussed prior to being deflected and laterally translated with regard to the optical axis of the optic (4) by being deflected.

14. Method according to claim 13, **characterized in that** the light beam (7) is deflected at points which are arranged around an image (17) of the pupil of the optic (4) or around an intermediate image (18) of the scanning range (35).

15. Method according to at least one of the preceding claims 8 to 14, **characterized in that** the electric field of at least one of the components of the coherent light beam (7) is modulated in such a way that the integral of the electric field over the pupil of the focussing optic (4) is zero.

## Revendications

1. Dispositif de stockage dynamique d'un rayon lumineux (7) par rapport à une optique (4) présentant une pupille focalisant le rayon lumineux (7) afin de balayer un objet (6) dans une zone de balayage bidimensionnelle (35) avec le rayon lumineux (7) focalisé, étant entendu que le dispositif présente des moyens de déviation du rayon (26) qui dévient le rayon lumineux (7) par rapport à l'axe optique de l'optique (4) dans deux directions différentes dans des angles de déviation modifiables de façon dynamique (31-34), étant entendu qu'au moins deux moyens de déviation du rayon (26) sont montés l'un derrière l'autre dans chaque direction, lesquels dévient le rayon lumineux (7) dans deux angles de déviation modifiables de façon dynamique (respectivement 31, 32 et 33, 34), **caractérisé en ce que** le deux angles de déviation (respectivement 31, 32 et 33, 34) dans lesquels les deux moyens de déviation du rayon (26) dévient le rayon lumineux dans chaque direction peuvent être modifiés indépendamment l'un de l'autre de telle sorte qu'à la fois la position du rayon lumineux (7) dans la direction respective dans la pupille de l'optique (4) effectuant la focalisation et l'angle du rayon lumineux (7) par rapport à l'axe optique de l'optique (4) effectuant la focalisation, et ainsi, la position du rayon lumineux (7) focalisé dans la zone de balayage peuvent être réglés, et **en ce qu'**il est prévu une commande pour les moyens de déviation du rayon (26) qui détermine les quatre angles de déviation (31 à 34) pour chaque point de la zone de balayage (35) de telle sorte que le rayon lumineux (7) s'étend toujours au même endroit à travers la pupille de l'optique (4).

2. Dispositif selon la revendication 1, **caractérisé en ce que** la commande détermine les quatre angles de déviation (31 à 34) à des valeurs successives de telle sorte que la zone de balayage (35) est balayée avec le rayon lumineux (7) focalisé selon un schéma prédéfini (36).

3. Dispositif selon au moins l'une des revendications précédentes, **caractérisé en ce qu'**il est prévu un dispositif de détection de la position du rayon pour détecter une position du rayon dans la pupille ou une représentation (17) de la pupille de l'optique (4) et un dispositif supplémentaire de détection de la position du rayon pour détecter en même temps une position du rayon dans la zone de balayage (35) ou une représentation de la zone de balayage.

4. Dispositif selon au moins l'une des revendications précédentes, **caractérisé en ce que** l'optique (4) collimate le rayon lumineux (7) avant qu'il rencontre les moyens de déviation du rayon (26) et **en ce que** les moyens de déviation du rayon basculent le rayon lumineux (7) collimaté par rapport à l'axe optique de l'optique (4).

5. Dispositif selon au moins l'une des revendications 1 à 3, **caractérisé en ce que** l'optique (4) focalise le rayon lumineux (7) avant qu'il rencontre les moyens de déviation du rayon (26) et **en ce que** les moyens de déviation du rayon décalent latéralement le rayon lumineux (7) focalisé par rapport à l'axe optique de l'optique (4).

6. Dispositif selon la revendication 5, **caractérisé en ce que** les moyens de déviation du rayon (26) sont agencés autour d'une représentation (17) de la pupille de l'optique (4) ou autour d'une image intermédiaire (18) de la zone de balayage (35).

7. Dispositif selon au moins l'une des revendications précédentes, **caractérisé en ce que** les moyens de déviation du rayon (26) comprennent des miroirs tournants (22 à 25) qui peuvent pivoter autour d'un axe de pivotement (27 à 30) s'étendant dans leur plan de miroir ou parallèlement à celui-ci.

8. Procédé de stockage dynamique d'un rayon lumineux par rapport à une optique focalisant le rayon lumineux afin de balayer un objet dans une zone de balayage bidimensionnelle avec le rayon lumineux focalisé, en particulier en utilisant un dispositif selon au moins l'une des revendications précédentes, dans lequel le rayon lumineux est dévié par rapport à l'axe optique de l'optique dans deux directions différentes dans des angles de déviation variant de façon dynamique, **caractérisé en ce que** le rayon lumineux (7) est dévié dans chaque direction au niveau de deux points situés l'un derrière l'autre dans deux angles de déviation (31 à 34) variant de façon dynamique indépendamment l'un de l'autre de telle sorte que le rayon lumineux (7) s'étend toujours au même endroit à travers la pupille de l'optique (4).

9. Procédé selon la revendication 8, **caractérisé en ce que** le rayon lumineux (7) est dévié de telle sorte qu'il s'étend avec son centre de gravité à travers le centre de la pupille de l'optique (4).

10. Procédé selon la revendication 8 ou 9, **caractérisé en ce que** le rayon lumineux (7) est dévié dans les quatre angles de déviation (31 à 34) de telle sorte que la zone de balayage (35) est balayée avec le rayon lumineux (7) focalisé selon un schéma prédéfini (36).

11. Procédé selon la revendication 9, **caractérisé en ce que** les quatre angles de déviation (31 à 34) pour chaque point de la zone de balayage (35) sont déterminés et enregistrés au préalable, étant entendu qu'une position du rayon dans la pupille ou dans une représentation (17) de la pupille de l'optique (4) et une position du rayon dans la zone de balayage (35) ou dans une représentation de la zone de balayage sont détectées en même temps.

12. Procédé selon au moins l'une des revendications 8 à 11 précédentes, **caractérisé en ce que** le rayon lumineux (7) est collimaté avant la déviation et basculé par rapport à l'axe optique de l'optique (4) du fait de la déviation.

13. Procédé selon au moins l'une des revendications 8 à 11 précédentes, **caractérisé en ce que** le rayon lumineux (7) est focalisé avant la déviation et décalé latéralement par rapport à l'axe optique de l'optique (4) du fait de la déviation.

14. Procédé selon la revendication 13, **caractérisé en ce que** le rayon lumineux (7) est dévié au niveau de points qui sont agencés autour d'une illustration (17) de la pupille de l'optique (4) ou autour d'une image intermédiaire (18) de la zone de balayage (35).

15. Procédé selon au moins l'une des revendications 8 à 14 précédentes, **caractérisé en ce que** le champ électrique pour au moins un composant du rayon lumineux (7) cohérent est modulé de telle sorte que l'intégrale du champ électrique par rapport à la pupille de l'optique (4) effectuant la focalisation est nulle.
